# FASCICULE DE BREVET EUROPEEN

(11) **EP 1 200 177 B1**
(45) Date de publication et mention de la délivrance du brevet: **08.06.2005**
(21) Numéro de dépôt: 00900605.7
(22) Date de dépôt: 19.01.2000
(51) Int. Cl.: B01D 53/81, F01N 3/26

(54) **SYSTEME DE NEUTRALISATION DE GAZ POLLUANTS PAR PYROLYSE**
SYSTEM ZUR NEUTRALISATION VON GASFÖRMIGEN VERUNREINIGUNGEN DURCH PYROLYSE
SYSTEM FOR NEUTRALISING POLLUTING GASES BY PYROLYSIS

(30) Priorité: 19.01.1999 FR 9900483
(43) Date de publication de la demande: 02.05.2002
(73) Titulaire: Browston Trading S.A., 1205 Geneve (CH)
(72) Inventeur: Roux, Claude, 93290 Tremblay en France (FR)
(74) Mandataire: Savatier, Yves
(86) Numéro de dépôt international: PCT/FR2000/000101
(87) Numéro de publication internationale: WO 2000/043094

(56) Documents cités:
- WO-A-92/14042
- WO-A-98/37944
- DE-A- 1 476 627
- FR-A- 2 702 004
- GB-A- 1 396 607
- US-A- 3 675 398
- US-A- 4 578 091
- PATENT ABSTRACTS OF JAPAN vol. 10, no. 331, 11 novembre 1986 (1986-11-11) & JP 61 135921 A (MITSUBISHI MOTORS CORP), 23 juin 1986 (1986-06-23)

## Description

L'invention concerne un système de neutralisation de gaz polluants par pyrolyse des particules et suies en suspension, rejetées notamment par les moteurs à combustion interne à essence ou diesel, ou par tous types de combustions industrielles rejetant des fumées nocives, par exemple usines d'incinération de déchets.

On sait que la combustion notamment des carburants alimentant les moteurs à combustion interne à essence ou gazoile ne peut jamais être équilibrée et complète du fait notamment d'un manque d'air au moment des transitoires et de la présence principalement de susbstances nocives dans les gaz d'échappement telles que monoxyde de carbone CO, hydrocarbures HC non brûlés ou partiellement brûlés, oxydes d'azote NOx, substances solides comme particules et suies. L'apparition de particules ou de suies résulte d'une carburation trop pauvre en air. Elle se produit notamment aux transitoires : démarrage au passage au vert des feux de signalisation, aux changements de vitesse sur plat, en côte et aux accélérations.

On connaît déjà des systèmes de traitement de ces polluants tels que les « pots catalytiques des automobiles et plus récemment des camions diesel, mettant en oeuvre des catalyseurs destinés à oxyder principalement le monoxyde de carbone, les résidus d'hydrocarbures non brûlés ou partiellement brûlés et d'oxyde d'azote NOx. Les inconvénients présentés par ce type de système réside notamment dans la difficulté de choix d'un métal ou d'un oxyde métallique catalyseur efficace pour accélérer ces réactions. Un catalyseur qui réduit le NOx au delà de N2, en N3H, ne conviendra pas parce que l'amoniac libéré à l'atmosphère se réoxydera en NOx. Un autre inconvénient important de ce système se manifeste au démarrage à froid du moteur à combustion interne et jusqu'à ce que le pot catalytique ait atteint sa température de fonctionnement optimal. Pendant cette période, les émissions de polluants non seulement ne sont pas réduites, mais accrues. Cet inconvénient oblige à choisir des métaux nobles et onéreux tels que par exemple le platine qui agit à plus basse température. En outre, le soufre S02 présent dans l'essence se trouve oxydé en SO3 par la catalyse, ce qui génère de l'acide sulfurique. D'une façon générale, les pots catalytiques sont très onéreux, réduisent la puissance des moteurs, accroissent la consommation de carburant et ajoutent un poids supplémentaire à la masse à vide des véhicules, ils ne neutralisent qu'une partie des polluants, leur efficacité est limitée. Quant aux procédés de « lavage des gaz », ils sont excessivement onéreux.

On connaît également des systèmes destinés à détruire par combustion les particules contenues dans les rejets polluants des moteurs dieseL Cette combustion laisse subsister des résidus toxiques carbonés. On connaît aussi des filtres à particules, mais ceux-ci se bouchent très vite et nécessitent soit leur changement ou l'adjonction d'un système de régénération qui en accroissent le coût.

Le document WO 92 14042 A décrit un système de neutralisation de gaz polluants comprenant un four à pyrolyse agencé pour retenir et détruire les résidus de combustion incomplète par l'intermédiaire de moyens présentant une grande surface d'échange. Le document FR-A-2 702 004 mentionne que lors de la destruction thermique par pyrolyse de résidus de combustion incomplète, ceux-ci ne sont que partiellement oxydés ce qui produit des poussières. Il mentionne également un moyen amortisseur sonore lors de la pyrolyse de résidus de combustion incomplète. Le document DE 14 76 627 A divulgue un dispositif de filtration combinant des unités de filtrage (37, 44, 46) et des unités d'amortissement sonore. Le document GB-A-1 396 607 décrit un système de neutralisation de gaz polluants comprenant un four à pyrolyse consistant en un ensemble de résistances électriques linéaires interchangeables 26a à 26 e tendues en travers du four entre des plaques isolantes 45. La surface d'échange de ces résistances avec les polluants traversant le four est faible et peu efficace. Le document WO 90 04 707 A décrit un système de neutralisation de gaz polluants comprenant un empilage de plaques métalliques portant chacune sur toute leur surface, une pluralité d'excroissances, lesdites plaques étant enroulées en spirale et introduites dans l'enceinte d'un four cylindrique à pyrolyse. Lesdites plaques peuvent être adaptées à fonctionner en tant que résistances électriques.

**Le problème à résoudre** consiste notamment :
- à fournir un système simple et robuste réduisant considérablement les émissions de polluants des gaz d'échappement de moteurs à combustion interne et celles des usines diverses, à un niveau très inférieur à celui déjà obtenu par les systèmes existants correspondant aux normes les plus sévères ;
- à fournir ce système à un coût égal et préférablement inférieur à celui des moyens traditionnels à puissance égale ;
- à éviter d'introduire une perte de charge qui accroît la consommation de carburant et réduit la puissance dans le cas des moteurs à combustion interne ;
- à accroître de façon importante la longévité du système :

Selon un premier mode de réalisation, la surface d'échange et de pyrolyse est constituée par un ensemble de sphères comportant chacune, sur toute leur surface, une pluralité d'excroissances (1, 2, 3) par exemple du type pointes de diamant ou similaire. Les sphères comportant chacune une pluralité d'excroissances, sont usinées dans de la roche calcaire ou de nature quelconque. Les sphères peuvent être également obtenues par moulage de poudre minérale préférablement calcaire.

Les sphères avec leurs excroissances peuvent être embouties en deux partie soudées, dans un métal à bon coefficient de transmission thermique, en feuille de très faible épaisseur. Ces sphères sont conditionnées à dimension et introduite dans un four à pyrolyse de dimensions corresppondantes.

Selon une seconde variante de réalisation, le moyen de neutralisation des gaz polluants présentant une très grande surface d'échange est constitué d'un empilage de plaques métalliques très minces à bon coefficient de transmission de chaleur, portant chacune, sur toute leur surface, une pluralité d'excroissances préférablement identiques, embouties en quinconce par rapport au sens de circulation des gaz. Ces plaques de pyrolyse sont introduites dans un four calorifugé de section rectangulaire ou carrée.

Selon une troisième variante de réalisation, le moyen de neutralisation des gaz polluants présentant une très grande surface d'échange est constitué d'une seule plaque de pyrolyse enroulée en spirale et introduite dans l'enceinte d'un four cylindrique calorifugé. La mise à température de cette plaque enroulée est effectuée à la mise sous tension juste avant le démarrage du moteur, en utilisant celle-ci comme résistance électrique.

Selon une quatrième variante de réalisation, le moyen de neutralisation des gaz polluants est constitué d'un ensemble de résistances électriques interchangeables enroulées en spirale à plat et empilées dans une enceinte calorifugée. La mise à température de la surface d'échange à pyrolyse, au moment du démarrage du moteur, est effectuée par une décharge de condensateurs de capacité adéquate. Le four à pyrolyse est disposé le plus près possible du moteur et est entièrement calorifugé ainsi que le tuyau d'évacuation des gaz d'échappement entre le moteur à combustion interne et ledit four à pyrolyse pour éviter les fuites thermiques.

Le système selon l'invention est constitué de modules assemblés entre eux ou intégrés, choisis selon le débit des gaz polluants et leur nature, parmi tout ou partie des modules suivants : module de four à pyrolyse, module de filtrage des particules et HC et de purification des gaz polluants, module amortisseur sonore et de réduction de température des gaz.

Pour les débits importants ou très importants de gaz polluants, la fonction de pyrolyse est assurée par une batterie de fours comportant un collecteur d'entrée et un collecteur de sortie qui coopérent, quand c'est nécessaire, avec un extracteur de fumées.

**Les avantages de la présente invention** sont les suivants :
- Réduction très importante des polluants gazeux ;
- Durée de vie accrue par rapport aux pots d'échappement classiques du fait de l'absence d'humidité et de la régénération continuelle par vibrations du four à pyrolyse ;
- Possibilité de réaliser des systèmes extra-plats très compacts pour toutes les puissances de moteurs ;
- Pas de perte de puissance des moteurs ;
- Pas de surconsommation de carburant ;
- Peu de supplément de poids par rapport aux pots d'échappement classiques ;
- Est opérationnel dès la mise en route du moteur ;
- Convient pour tous les moteurs à poste fixe.
- Utilisable pour la réduction des fumées industrielles et des installations de chauffage au mazout des immeubles.

L'invention est décrite en détail dans le texte ci-après, en référence aux dessins annexés donnés à titre d'exemples non limitatifs, dans lesquels :
- les figures 1 à 4 montrent des exemples schématiques de moyens de matérialisation de surfaces pseudo-sphériques d'échange et de pyrolyse du système selon l'invention pour un moteur diesel ou à essence;
- la figure 5 montre schématiquement, en coupe vue de face, un exemple de matérialisation de surface d'échange et de cuisson constitué d'un ensemble de sphères creuses métalliques, portant des excroissances, en place dans une enceinte étanche calorifugée ;
- la figure 6 montre schématiquement, en coupe vue de face, un exemple de matérialisation de surface d'échange et de pyrolyse constitué d'un ensemble de sphères minérales portant des excroissances, en place dans une enceinte étanche calorifugée après interposition d'une chaussette métallique et de rondelles constituées de copeaux d'acier inoxydable ;
- la figure 7 montre schématiquement, en vue de face, un exemple de pot catalytique de type connu ;
- la figure 8 montre schématiquement, en vue de face, un exemple de pot à pyrolyse complet selon l'invention pour des véhicules poids lourd, des autobus et cars, engins de chantier...

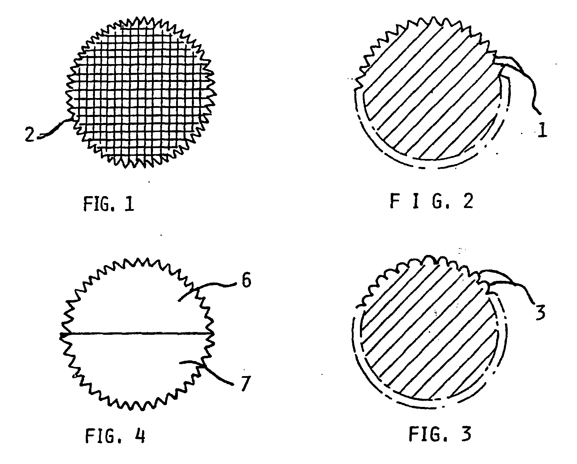

Tel qu'il est représenté sur les **figures 1 à 3**, l'exemple de grande surface d'échange et de pyrolyse selon l'invention pour assécher les gaz d'échappement, retenir et effectuer la pyrolyse rapide des particules et des HC imbrûlés ou partiellement brûlés, est constitué d'excroissances usinées à la surface de sphères minérales. La forme de ces excroissances identiques est préférablement celle qui offre la plus grande surface d'échange avec les gaz. Elles peuvent par exemple être en « pointes de diamant » 2, en pointes plus aiguës 1 (pyramides isocèles), ou en demi-sphère 3 ou autres formes faciles à obtenir par usinage ou par moulage sous pression de poussières minérale comme par exemple de calcaire. Par moulage, on peut obtenir d'autres formes portant ces excroissances que la sphère, mais cette dernière est préférable car elle offre la plus grande surface d'échange à volume égal et facilite la circulation des gaz.

Sur la **figure 4,** on a représenté un exemple de sphère creuse en tôle mince, de l'ordre de 0,4mm d'épaisseur, portant des excroissances en pointe de diamant, embouties par moitié 6 et 7 et soudées par exemple électriquement ou par ultra-sons. Le matériau est à choisir parmi ceux qui offrent le meilleur coefficient de transmission thermique et résiste bien à la corrosion des gaz d'échappement ou autres rejets toxiques. A titre d'exemple, le diamètre des sphères est de l'ordre de 20mm pour les véhicules légers, de 50mm pour les cars et de 60mm pour les véhicules poids lourd. La quantité des sphères est fonction du débit des polluants à neutraliser.
Les excroissances ont pour première fonction de réduire l'inertie thermique de la surface des sphères de façon telle qu'elles se mettent quasi instantanément à température des gaz d'échappement dès la mise en marche du moteur à combustion interne, les sphères n'ayant pas à être chauffées à coeur pour être efficaces. Elles constituent une masse d'accumulation thermique. Les excroissances ont pour seconde fonction de multiplier la surface d'échange avec les gaz et de retenir au passage les particules et les résidus imbrûlés ou partiellement brûlés. Ils se collent sur ces excroissances d'autant plus facilement que leurs dimensions sont réduites et cuisent très rapidement. Les excroissances ont pour troisième fonction de faciliter le passage des gaz en évitant de provoquer une perte de charges réduisant la puissance du moteur.
La pyrolyse des particules et des suies réduit considérablement leur volume, voire les fait disparaître quasi totalement. Après la pyrolyse, les résidus de particules ne contiennent plus de carbone toxique CO. Celui-ci se transforme en CO² non toxique. Les HC sont également transformés par la pyrolyse et perdent leur nocivité. L'humidité H2O produite par la combustion du carburant est éliminée au passage au travers des sphères. Les très faibles résidus de particules et d'HC finissent par se décoller du fait des vibrations engendrées par le roulement et par le passage des gaz, ce qui régénère en permanence les surfaces d'échange. Ce très faible volume de résidus est entraîné par la pression des gaz dans la partie filtrante suivante.

Les sphères minérales ou métalliques creuses représentent un premier moyen de matérialisation de la surface d'échange et de pyrolyse. Dans le cas particulièrement des sphères de grand diamètre, les zones de passage entre les sphères sont importantes et sont susceptibles de laisser passer des particules et suies non neutralisées ou insuffisamment neutralisées.

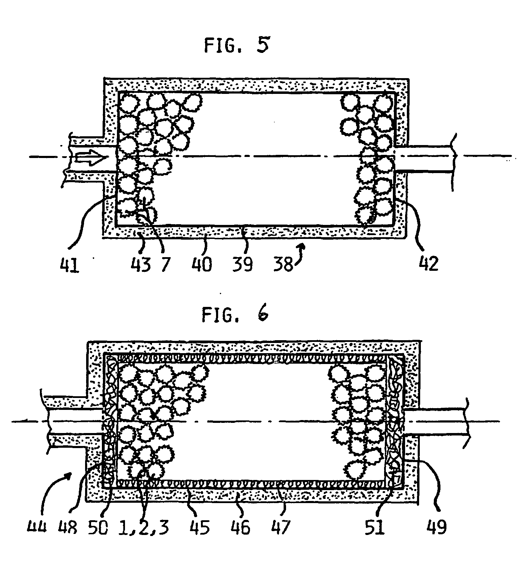

La **figure 5** montre schématiquement en coupe vue de face, un exemple de four cylindrique à pyrolyse 38 comportant une paroi cylindrique 39 entourée d'un calorifugeage 40, dont la surface d'échange est constituée d'un ensemble de sphères métalliques creuses 7 porteuses d'excroissances, conditionnées préalablement au volume du four dans un filet en acier inoxydable, mis en place avant sertissage de la paroi de fermeture 41 ou 42. Le nombre et le diamètre des sphères ainsi que le diamètre et la longueur du four sont fonction du débit des gaz et de leur nature (essence, gazoile, ou autres dans les applications autres que celles de l'automobile).

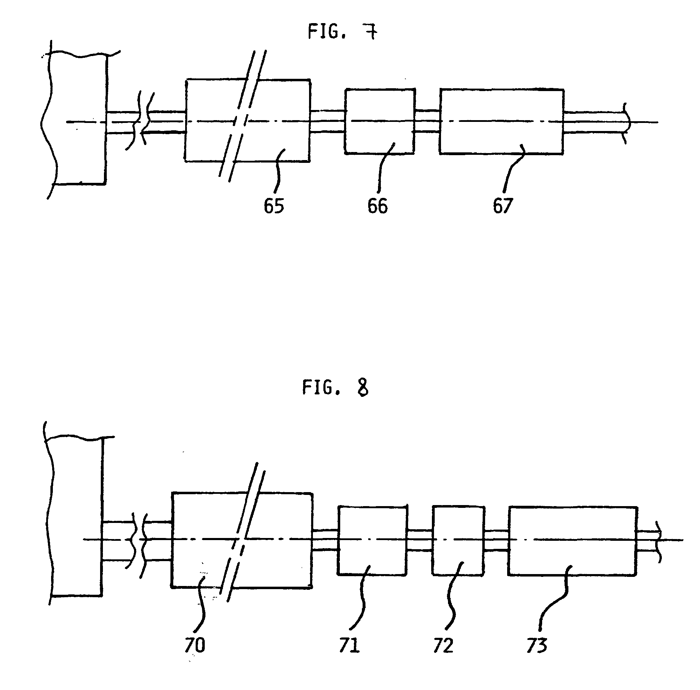

La **figure 6** montre schématiquement en coupe vue de face, un exemple de four cylindrique à pyrolyse 44 comportant une paroi étanche 45 entourée d'un calorifugeage 46, dont la surface d'échange est constituée d'un ensemble de sphères minérales 1, 2 ou 3, porteuses d'excroissances, conditionnées préalablement au volume du four dans un filet en acier inoxydable, et introduit dans une chaussette 47, mis en place avant sertissage de la paroi de fermeture 48 ou 49 après interposition de rondelles 50, 51 constituées d'un fil en acier inoxydable enchevêtré, présentant en section trois arêtes très tranchantes, également conditionnées préalablement dans un filet en acier inoxydable. Les particules et les suies sont fragmentées par choc sur ce fil et sur ses arêtes successives au travers de son enchevêtrement dans la rondelle. Ce fil peut être obtenu sous forme d'un copeau de tour continu. Il est ensuite enchevêtré Du fait de sa nature, cette rondelle fait fonction d'amortisseur acoustique pour abaisser le niveau sonore des gaz d'échappement.
Le nombre et le diamètre des sphères ainsi que le diamètre et la longueur du four sont fonction du débit des gaz et de leur nature (essence, gazoile ou autres dans les d'applications autres que l'automobile).

La **figure 7** montre une configuration de pot catalytique classique comprenant un module de catalyse 65, un module intermédiaire 66 de filtrage et un module 67 amortisseur acoustique.

La **figure 8** montre schématiquement la configuration la plus complète du système selon l'invention pour les moteurs de grande puissance. Cette configuration est constituée de modules assemblés entre eux par sertissage de leur tuyau d'entrée et de leur tuyau de sortie. Un même type de module peut être réalisé selon une gamme de longueurs et/ou de sections différentes, ce qui permet de constituer les systèmes en fonction du débit, de la nature des gaz et de la densité de leur charge en particules ou suies à cuire, pour des plages de puissance prédéterminées, par le choix de tout ou partie des modules suivants : un module 70 de neutralisation par pyrolyse. Cette fonction pourrait également être assurée par exemple par un papier à charbon filtrant en accordéon également conditionné en filet métallique. Ce volume de charbon filtrant a pour fonction de retenir les très fins résidus de pyrolyse en provenance des moyens précédents, de poursuivre la réduction des composants gazeux résiduels qu'ils pourraient encore contenir, et de purifier au passage, les polluants gazeux résiduels en poursuivant leur neutralisation. ; un module 72 d'injection de gaz désodorisant et neutralisant.

## Revendications

1. Système de neutralisation de polluants contenus dans les gaz rejetés notamment par les moteurs à combustion interne, le système comprenant un four à pyrolyse agencé pour retenir et détruire les polluants des sphères présentant une surface d'échange à température de pyrolyse avec lesdits polluants; **caractérisé en ce que** lesdites sphères comportent chacune, sur toute leur surface, une pluralité d'excroissances (1, 2, 3).

2. Système de neutralisation de polluants selon la revendication 1, **caractérisé en ce que** les excroissances sont du type pointe de diamant.

3. Système de neutralisation de polluants selon la revendication 1 ou 2, **caractérisé en ce que** les sphères sont usinées dans de la roche de nature quelconque.

4. Système de neutralisation de polluants selon la revendication 1 ou 2, **caractérisé en ce que** les sphères sont usinées dans de la roche calcaire.

5. Système de neutralisation de polluants selon la revendication 1 ou 2, **caractérisé en ce que** les sphères sont réalisées par moulage de poudre minérale calcaire.

6. Système de neutralisation de polluants selon la revendication 1 ou 2, **caractérisé en ce que** les sphères sont embouties par moitié (6, 7) dans une feuille de tôle de l'ordre de 0,4mm d'épaisseur, et soudées ensuite entre elles.

7. Système de neutralisation de gaz polluants selon l'une des revendications 1 ou 6, **caractérisé en ce que** les sphères sont des sphères métalliques creuses (7) et emplissent l'enceinte (39) du four à pyrolyse

8. Système de neutralisation de polluants selon l'une des revendications 1 à 5, **caractérisé en ce que** les sphères sont des sphères minérales conditionnées dans un filet en acier inoxydable enfilé dans une chaussette (47) en acier inoxydable, et introduit dans l'enceinte (45) du four après interposition de rondelles (50, 51) destinées à fragmenter par choc les grosses particules ou hydrocarbures imbrûlés ou partiellement brûlés, constitué par un enchevêtrement de copeaux d'acier inoxydable, disposé préférablement en amont des sphères à pyrolyse.

## Patentansprüche

1. System zur Neutralisierung von Verunreinigungen, die in den insbesondere von Verbrennungsmotoren ausgestossenen Gasen enthalten sind, wobei das System einen Pyrolyseofen umfasst, der, um die Verunreinigungen zurückzuhalten und zu zerstören, mit Kugeln ausgestattet ist, die eine Fläche des Austausches mit diesen Verunreinigungen bei Pyrolysetemperatur aufweisen; **dadurch gekennzeichnet, dass** jede dieser Kugeln über ihre gesamte Oberfläche hinweg eine Mehrzahl von Protuberanzen (1, 2, 3) umfasst.

2. System zur Neutralisierung von Verunreinigungen nach Anspruch 1, **dadurch gekennzeichnet, dass** die Protuberanzen diamantspitzenartig sind.

3. System zur Neutralisierung von Verunreinigungen nach Anspruch 1 oder 2, **dadurch gekennzeichnet, dass** die Kugeln aus einem Stein irgendeiner Art gearbeitet sind.

4. System zur Neutralisierung von Verunreinigungen nach Anspruch 1 oder 2, **dadurch gekennzeichnet, dass** die Kugeln aus Kalkstein gearbeitet sind.

5. System zur Neutralisierung von Verunreinigungen nach Anspruch 1 oder 2, **dadurch gekennzeichnet, dass** die Kugeln durch Gussformen aus Kalkmineralienpulver hergestellt sind.

6. System zur Neutralisierung von Verunreinigungen nach Anspruch 1 oder 2, **dadurch gekennzeichnet, dass** die Kugeln als Hälften (6, 7) aus einer Blechtafel mit einer Dicke in der Grössenordnung von 0,4 mm getrieben und dann miteinander verschweisst sind.

7. System zur Neutralisierung von gasförmigen Verunreinigungen nach einem der Ansprüche 1 oder 6, **dadurch gekennzeichnet, dass** die Kugeln hohle Metallkugeln (7) sind und die Kammer (39) des Pyrolyseofens ausfüllen.

8. System zur Neutralisierung von Verunreinigungen nach einem der Ansprüche 1 bis 5, **dadurch gekennzeichnet, dass** die Kugeln Mineralienkugeln sind, die, in ein Netz aus nichtrostendem Stahl gepackt, das in einen Strumpf (47) aus nichtrostendem Stahl eingesteckt ist, nach Dazwischenfügen von Scheiben (50, 51), bestehend aus einem Geflecht von Spänen aus nichtrostendem Stahl, dazu bestimmt, durch Stoss die grossen Teilchen oder nicht bzw. nur teilweise verbrannte Kohlenwasserstoffe zu zerkleinern, und bevorzugt stromaufwärts von den Pyrolysekugeln angeordnet, in die Kammer (45) des Ofens eingeführt werden.

## Claims

1. System for neutralizing pollutants present in the gases released in particular by internal combustion engines, the system comprising a pyrolysis furnace designed to retain and destroy the pollutants from spheres having an exchange surface area at the pyrolysis temperature with said pollutants, **characterized in that** said spheres each comprise, over their entire surface, a plurality of protuberances (1,2,3).

2. System for neutralizing pollutants according to Claim 1, **characterized in that** the protuberances are of the diamond point type.

3. System for neutralizing pollutants according to either of Claims 1 and 2, **characterized in that** the spheres are machined from any type of rock.

4. System for neutralizing pollutants according to either of Claims 1 and 2, **characterized in that** the spheres are machined from limestone rock.

5. System for neutralizing pollutants according to either of Claims 1 and 2, **characterized in that** the spheres are prepared by moulding mineral limestone powder.

6. System for neutralizing pollutants according to either of Claims 1 and 2, **characterized in that** the spheres are pressed in halves (6, 7) from a metal sheet about 0.4 mm thick, and then welded together.

7. System for neutralizing pollutant gases according to either of Claims 1 and 6, **characterized in that** the spheres are hollow metal spheres (7) and fill the chamber (39) of the pyrolysis furnace.

8. System for neutralizing pollutants according to one of Claims 1 to 5, **characterized in that** the spheres are mineral spheres packed in a stainless steel net slipped into a stainless steel sleeve (47) and introduced into the chamber (45) of the furnace after the insertion of washers (50, 51) that are designed to break, by impact, the large particulates or unburnt or partially burnt hydrocarbons, which consists of an interlocking of stainless steel chips and is preferably disposed upstream of the pyrolysis spheres.
